# EUROPÄISCHE PATENTANMELDUNG

(11) **EP 1 959 540 A2**
(43) Veröffentlichungstag der Anmeldung: **20.08.2008**
(21) Anmeldenummer: 08155792.8
(22) Anmeldetag: 29.03.2001
(51) Int. Cl.: H02K 1/28, H02K 11/00

(54) **Reluktanzmotor**

(30) Priorität: 01.04.2000 DE 10016396; 21.07.2000 DE 10035540
(62) Teilanmeldung aus: 01933776.5
(71) Anmelder: Vorwerk & Co. Interholding GmbH, 42275 Wuppertal (DE)
(72) Erfinder: Caldewey, Uwe, 44229 Dortmund (DE); Schmitz, Volker, 42653 Solingen (DE); Hilgers, Stefan, 45357 Essen (DE); Schiffarth, Markus, 58332 Schwelm (DE)
(74) Vertreter: Müller, Enno

(57) **Zusammenfassung**

Die Erfindung betrifft einen Reluktanzmotor mit einem Rotor (1) und einem Stator (10), wobei der Stator (10) einzelne Statorspulen mit Statorwicklungen (22) aufweist. Für eine vorteilhafte Anordnung im Hinblick auf eine Ortsbestimmung des Rotors schlägt die Erfindung vor, dass eine Leiterplatte (31) vorgesehen ist und dass die Leiterplatte (31) Lagesensoren für den Rotor (1) aufweist, die mit einer rotorseitigen Geberscheibe (45) zusammenwirken.

## Beschreibung

Die Erfindung betrifft einen Reluktanzmotor mit einem Rotor und einem Stator, wobei der Stator einzelne Statorspulen mit Statorwicklungen aufweist.

Reluktanzmotoren sind bereits in verschiedenen Ausgestaltungen bekannt geworden. Es wird bspw. auf die GB 2 319 908 A verwiesen. Aus der EP 952658 A2 ist es für einen Elektromotor mit einem Rotor und einem Stator bekannt, eine Leiterplatte vorzusehen und auf der Leiterplatte Lagesensoren für den Rotor anzubringen.

Ausgehend von dem genannten Stand der Technik stellt sich der Erfindung die Aufgabe, eine vorteilhafte Anordnung für einen Reluktanzmotor im Hinblick auf eine Ortsbestimmung des Rotors anzugeben.

Diese Aufgabe ist beim Gegenstand des Anspruches 1 gelöst, wobei darauf abgestellt ist, dass eine Leiterplatte vorgesehen ist und dass die Leiterplatte Lagesensoren für den Rotor aufweist, die mit einer rotorseitigen Geberscheibe zusammenwirken. Die Zusammenfassung der Lagesensoren mit einer Leiterplatte erbringt für einen Reluktanzmotor schon eine günstige, hinsichtlich der Leiterplatte mit den Lagesensoren formentierbare Zusammenfassung von Funktionen. Zudem kann die größere Leiterplatte günstig montiert werden, unter Einhaltung einer vorgegebenen Winkelbeziehung. Dadurch, dass die Lagesensoren weiterhin mit einer Geberscheibe zusammenwirken, die zudem rotorseitig angeordnet ist, kann eine günstige Abstimmung auf die Sensoren vorgenommen werden. Die Sensoren erfassen nicht den Rotor als solchen, sondern wirken nur mit einer diesbezüglichen Geberscheibe zusammen.

Eine Anwendung liegt in der Ein- und Abschaltung der Statorwicklungen mittels der die Rotorstellung erkennenden Sensoren.

Bevorzugt ist, dass abhängig von der Umdrehungszahl des Rotors unterschiedliche Regelverfahren angewendet werden, nämlich bei kleineren Umdrehungszahlen durch die Vorgabe eines festen Drehfeldes. Insbesondere bei Reluktanzmotoren, welche einen großen Drehzahlbereich aufweisen, ist es nicht mehr ausreichend, ein Standardregelverfahren zu verwenden. Vielmehr ist eine bereichsabhängige Regelung erforderlich. Besonders bei sehr niedrigen Drehzahlen von bspw. ca. 100 Umdrehungen pro Minute erweist sich die erfindungsgemäße Vorgabe eines festen Drehfeldes als vorteilhaft. Bei höheren Drehzahlen von bspw. > 400 Upm wird ein Stromhysterese-Regelverfahren angewendet, wobei weiter eine Anpassung der Regelparameter bevorzugt wird. Als besonders vorteilhaft erweist sich weiter, dass bei Vorgabe eines Drehfeldes die Anpassung des Rotorstromes bzw. dessen Reduktion auf einen hinreichend großen Wert erfolgt. Bei höheren Umdrehungszahlen des Reluktanzmotors ist vorgesehen, dass beim hierbei angewendeten Stromhysterese-Regelverfahren ein Ein- und Abschalten der Wicklungen mittels der genannten Rotorstellung-Erkennung erfolgt. Weiter kann hinsichtlich des Stromhysterese-Regelverfahrens vorgesehen sein, dass der vordefinierte Strom durch Aufprägung einer konstanten Spannung erreicht wird und dass bei Aufprägung der Spannung die Zeit bis zum Erreichen des maximalen Stromwertes gemessen wird, als Maß der Belastung des Motors. Die Induktivität einer Statorspule ist u. a. abhängig vom Luftspalt zwischen Rotor und Stator. Hieraus ergibt sich eine ständige Änderung der Induktivität bei einer Drehung des Rotors. Bei Belastung verschiebt sich der Winkel zwischen Rotor und Statorfeld, was eine Verringerung der Induktivität in der Statorspule beim Einschalten der Spannung zur Folge hat. Diese Änderung wird erfindungsgemäß beim Stromhysterese-Regelverfahren erfasst. Hierzu wird weiterhin vorgeschlagen, dass der vordefinierte Strom durch Aus- und Einschalten einer positiven Spannung beibehalten wird. Der Strom in der Statorspule wird bevorzugt nach dem Pulsweiten-Modulationsverfahren gesteuert. Bei diesem Verfahren werden die Spulen abwechselnd auf eine positive und negative konstante Spannung geschaltet. Der Strom erhöht sich mit der positiven Spannung und senkt sich umgekehrt mit der negativen Spannung ab. Aus dem Taktverhältnis zwischen Stromerhöhung und -absenkung ergibt sich die resultierende gewünschte Stromhöhe in der jeweiligen Spule. Im vorliegenden Stromhysterese-Regelverfahren wird ein Strom in einer definierten Höhe eingeprägt, indem die positive Spannung so lange auf die Spule geschaltet wird, bis ein Maximalwert überschritten wird. Hiernach wird die Spannung abwechselnd aus- und eingeschaltet, um den vordefinierten Stromwert zu erhalten. Die Zeit, die vom Einschalten der Spannung bis zum Erreichen des maximalen Wertes vergeht, ist von der Induktivität abhängig. Bei Belastung verringert sich die Induktivität im Einschaltzeitpunkt. Aus dieser Veränderung kann die Belastung des Motors zwischen dem Einschalten der Spannung und dem Signal, dass der Maximalstrom erreicht ist, bestimmt werden. In einer Weiterbildung des Verfahrens ist vorgesehen, dass bei Erreichen eines Grenzstromes zur Verhinderung einer Motor-überlastung eine Drehzahlverringerung erfolgt. Danach erfolgt die Drehzahlverringerung bevorzugt bei einem solchen maximalen Stromwert, der speziell auch eine Obergrenze der Belastbarkeit markiert und insofern als Grenzstrom bezeichnet wird. Um eine Überlastung des Motors zu vermeiden, kann demzufolge bei zu hoher Last die Drehzahl reduziert werden. Weiter wird vorgeschlagen, dass die Zeitmessung durch Starten eines internen Zählers beim Einschalten der Spannung und Anhalten des Zählers bei Überschreiten eines maximalen Stromwertes erfolgt. Diese Zeitmessung kann in einfachster Weise durch eine Mikrokontroller-Steuerung realisiert sein. Hierbei erweist es sich weiter als vorteilhaft, dass, ausgelöst durch Erreichen eines Minimal-Zählerwertes, eine Drehzahlreduzierung gesteuert wird. Darüber hinaus wird vorgeschlagen, dass eine Steuerung der Statorströme abhängig von der gemessenen Zeit erfolgt, wobei weiter der vordefinierte Strom veränderbar ist. Zudem wird vorgeschlagen, dass der vordefinierte Strom stufenlos veränderbar ist, sowie dass die Steuerung der Statorströme mittels eines Umrichters erfolgt. Hinsichtlich der vorbeschriebenen Ausführung eines erfindungsgemäßen Stromhysterese-Regelverfahrens wird im Weiteren auf dieDE-A1 198 25 926 verwiesen. Der Inhalt dieser Patentanmeldung wird hiermit vollinhaltlich in die Offenbarung vorliegender Erfindung mit einbezogen, auch zu dem Zwecke, Merkmale dieser Patentanmeldung in Ansprüche vorliegender Erfindung mit einzubeziehen. Zur Positionserfassung der Rotorstellung ist in einer vorteilhaften Weiterbildung des Verfahrens vorgesehen, dass die Rotorstellung mittels einer Reflexlichtschranke ermittelt wird, wobei die Lichtquelle im Stator angeordnet ist und durch Ausrichtung auf den Rotor unmittelbar die Reflexion des Rotors zur Messung genutzt wird. Weiter erweist es sich hierbei als vorteilhaft, dass für jede Phase ein Lagegeber vorhanden ist. So sind bspw. bei einem dreiphasigen Motor entsprechend drei Lagesensoren vorgesehen, dies zumindest, sofern in jeder Rotorposition auch die entsprechende Phase bestromt werden soll (Ausnahme bei kleinen Umdrehungszahlen und damit einhergehenden Regelverfahren durch Vorgabe eines festen Drehfeldes). Zur Detektierung der Position können Reflexlichtschranken verwendet werden. In vorteilhafter Weise sind diese Reflexlichtschranken direkt auf den Rotor gerichtet, so dass Toleranzen einer Geberscheibe und deren Winkelversatz automatisch eliminiert werden. Beim Anlaufen des Reluktanzmotors kann es in Abhängigkeit vom Belastungsmoment zu Schwingungen kommen. Dies tritt auf, sobald von der einen auf die nächste Phase umgeschaltet wird. Ist das Belastungsmoment groß, wird die neue Position nicht erreicht; vielmehr wird der Rotor durch die Gegenkraft zurückgedreht. Aufgrund der geringen Masse des Rotors kann es daher zum Schwingen zwischen diesen beiden Zuständen kommen. Seitens der Regelelektronik kann das Rückwärtsdrehen des Rotors erkannt werden, zumindest wenn für jede Phase ein Lagegeber vorhanden ist. Erfindungsgemäß wird diesbezüglich vorgeschlagen, dass bei Einleitung einer Rückdrehung des Rotors keine Phase mehr bestromt wird. Zufolge dessen wird nach Erkennen einer Rückdrehung des Rotors durch die Elektronik ein erneuter Anlaufvorgang eingeleitet. Alternativ kann vorgesehen sein, dass bei Einleitung einer Rückdrehung die letzte Phase verlängert bestromt wird. In beiden Verfahrensformen wird eine Verbesserung des Anlaufverhaltens erreicht. Insbesondere wird das Schwingen an einem Phasenumschaltpunkt zuverlässig unterdrückt.

Zur Regelung eines Reluktanzmotors mit einem Rotor und einem Stator, wobei der Stator einzelne Statorspulen aufweist und je nach Belastung des Motors ein vordefinierter Strom in den Spulen fließt kann vorgesehen sein, dass an der Statorwicklung eine Temperaturerfassung mittels eines Temperaturfühlers erfolgen. Im Vergleich zu einem Universalmotor ist der Wirkungsgradverlauf über den gesamten Drehzahlbereich deutlich gleichmäßiger. Auch wird bei maximaler Belastung besonders im niedrigen Drehzahlbereich eine unzulässig hohe Wicklungstemperatur erreicht, wenn keine zusätzlichen Kühlmaßnahmen vorgesehen sind. Um eine Überhitzung zu verhindern, ist die erfindungsgemäße Temperaturerfassung an der Statorwicklung vorgesehen, wobei weiter bevorzugt der Temperaturfühler ein NTC ist. Mittels Letzterem, welcher bevorzugt direkt am Statorpaket angeordnet ist, wird die Temperatur erfasst. Mittels der Elektronik kann hiernach der Reluktanzmotor entsprechend beeinflusst werden, so bspw. bei Überschreiten einer Temperaturgrenze durch Abschalten des Motors oder durch eine Begrenzung des Phasenstromes, woraus sich auf einfache Art und Weise eine Überlastsicherung ergibt.

Es wird auch vorgeschlagen, dass der Motor sowohl links als auch rechts drehbar antreibbar ist. Zufolge dessen ist ein Regelverfahren für einen Reluktanzmotor angegeben, welches, bei Einsatz des Motors bspw. in einer Küchenmaschine mit einem Rührwerk zur Zubereitung von Speisen, in vorteilhafter Weise durch Drehrichtungswechsel neuartige Zubereitungsrezepte ermöglicht.

Um bei einem Abschalten des Motors und/oder bei Unterbrechung der Stromversorgung des Motors ein schnelles Abbremsen desselben auch aus hohen Drehzahlen zu ermöglichen, ist zunächst vorgesehen, dass die Bremsenergie bzw. die Rotationsenergie des Rotors zum Betrieb des Motors als Generator genutzt wird. Des Weiteren kann eine Abbremsung des Motors erfindungsgemäß durch eine gleichzeitige Bestromung aller Phasen erfolgen. Bevorzugt wird ein Verfahren zum Abbremsen des Motors aus einer Kombination von Generatorbetrieb und gleichzeitiger Bestromung aller Phasen, wobei ein ständiges Wechseln der beiden Bremsverfahren durch einen Mikrokontroller bis zum Stillstand des Motors erfolgt.

Um hinsichtlich einer Reduzierung der Schallemission eine vorteilhafte Ausbildung zu erreichen, ist vorgesehen, dass die Zwischenräume zwischen den flügelartigen Rotorsegmenten zur Schaffung eines Zylinderkörpers ausgefüllt sind. Ein wesentliches Problem bei Reluktanzmotoren stellt die Schallemission bei hohen Drehzahlen dar. Bedingt durch die offene Bauform des Rotors und den geringen Luftspalt wirkt der Motor in Art einer Sirene, sobald ein Rotorpol an einem Statorpol vorbeizieht. Abhilfe schafft hier die erfindungsgemäße Homogenisierung der Rotoroberfläche. Dies ist erreicht durch Ausfüllen der Freiräume im Rotor mittels entsprechender Füllsegmente. Mit deren Hilfe erhält der Rotor eine zylindrische Form, wodurch Druckschwankungen bei Drehung des Rotors im Stator wirkungsvoll unterdrückt werden, so dass die Schallemission deutlich reduziert wird. Die Segmente lassen sich gleichzeitig auch zum Wuchten des Rotors mit verwenden. Bevorzugt wird hierbei eine Ausgestaltung, bei welcher die Ausfüllung mittels zwei axial zusammensteckbaren, Füllsegmente aufweisenden Auskleidungsteilen erfolgt. Konkret kann hierbei vorgesehen sein, dass ein Auskleidungsteil ausgehend von einem Kreisscheibenteil sich erstreckende Füllkörpersegmente aufweist, wobei der Durchmesser des Kreisscheibenteiles bevorzugt dem Rotordurchmesser angepasst ist und die Füllkörpersegmente entsprechend den Freiräumen zwischen den Rotorsegmenten angepasst ausgebildet sind. Weiter wird vorgeschlagen, dass die Füllkörpersegmente Kunststoffteile sind. Bei einer Ausbildung der Segmente als Kunststoffspritzteile sind deren Oberflächen in beliebiger Form bzw. Struktur ausführbar. Weiter lässt sich durch geeignete Ausbildung der Füllkörpersegmente eine Art Kühllüfter erzeugen. Um die Schallemission weiter zu reduzieren, wird vorgeschlagen, dass der Zwischenraum zwischen den Statorwicklungen durch einen Statorabdeckkörper ausgefüllt ist, wobei weiter vorgeschlagen wird, dass der Statorabdeckkörper als Zylinder ausgebildet ist. In einer alternativen Ausgestaltung des Erfindungsgegenstandes ist vorgesehen, dass die Statorwicklungen rotorseitig unter Überdeckung eines Zwischenraumes zwischen den Statorwicklungen abgedeckt sind, wobei weiter bevorzugt eine Mehrzahl von Statorabdeckkörpern vorgesehen ist, die sich rotorseitig zu einem Zylinder ergänzen. Auch durch diese erfindungsgemäße Ausgestaltung wird eine Homogenisierung der Oberflächen im Motor erzielt, so dass der Luftspalt auf dem gesamten Umfang nahezu konstant bleibt. Wird eine Lösung mit Einzelwickelkörpern bevorzugt, so kann durch Anformung entsprechender Rundungen die Innenseite des Stators derartig gestaltet werden, dass die geforderte runde Innenkontur entsteht. Um eine Lösung anzugeben, bei welcher eine kollisionsfreie Montage der einzelnen Wickelkörper bzw. Statorabdeckkörper erreicht wird, wird vorgeschlagen, dass Statorabdeckkörper mit unterschiedlich großen, den Zwischenraum zwischen den Statorwicklungen überdeckenden, rotorseitigen Decksegmenten vorgesehen sind, wobei die Rundungen an einem Wickel- bzw. Statorabdeckkörper ein größeres Segment ausfüllt als das benachbarte. Zur Befestigung dieser Statorabdeckkörper bzw. Wickelkörper können an diesen Rasthaken ausgeprägt sein, welche am Statorkern bzw. -gehäuse festrasten, so dass eine mechanische Arretierung erfolgt. Bei Montage der Lagerbrücken für den Rotor werden diese Rasthaken zusätzlich gegen Abrutschen gesichert.

Zudem ist vorgesehen, dass der Statorabdeckkörper Fenster aufweist, in welchen die metallischen Wickelkerne rotorseitig freiliegen. Um den Motor möglichst einfach fertigen zu können, ist eine geeignete Wickeltechnik erforderlich. Üblich ist es, einzelne Spulen auf einem Wickelkörper zu wickeln und anschließend jede einzeln im Stator zu montieren. Möglich ist es jedoch auch, einen kompletten Wickelkörper mit allen Spulen zugleich in den Stator einzuschieben. Diesbezüglich wird vorgeschlagen, dass der Statorabdeckkörper Wickelkernschuhe aufweist, welche die Wicklungen tragen. Der Statorabdeckkörper dient demnach zugleich als Spulenkörper, welcher ähnlich wie bei einem Rotor eines Universalmotors bewickelt wird. Anschließend wird der komplette Körper in den Stator eingeführt, wozu in vorteilhafter Weise vorgesehen ist, dass die Wicklungen einseitig in das Innere des von dem Stator begrenzten Raumes vorragend ausgebildet sind. Hierzu sind in das Innere des von dem Stator begrenzten Raumes abgewinkelte Wickelköpfe an dem Statorabdeckkörper bzw. Spulenkörper vorgesehen. Um den Aufbau des Motors, insbesondere die Montage desselben weiter zu vereinfachen, ist in einer vorteilhaften Weiterbildung des Erfindungsgegenstandes vorgesehen, dass der Statorabdeckkörper einseitig angeformt oder angebracht eine Lageraufnahme für den Rotor aufweist. Im Zuge einer weiteren Vereinfachung des Reluktanzmotors bietet es sich an, die Kontaktierung desselben ohne Kabel vorzunehmen. Diesbezüglich wird vorgeschlagen, dass an dem Wickelkernschuh ein Bügelfederkontakt angebracht ist, der fußseitig unmittelbar von der Wicklung kontaktiert ist. So kann in einer vorteilhaften Weiterbildung dieser Bügelfederkontakt oberseitig mit einer Leiterplatte kontaktieren, wobei letztere über eine geeignete Verrastung mit dem Motor bzw. der die Lageraufnahme bildenden Brücke verbunden ist. Vorgeschlagen wird neben dieser mittelbaren Kontaktierung auch eine Lösung, bei welcher die Wicklung Kontakte aufweist, die unmittelbar eine Leiterplatte kontaktieren. In einer Ausgestaltung des Erfindungsgegenstandes ist vorgesehen, dass jede Wicklung zwei Anschluss-Stifte aufweist, die mit einer Leiterplatte kontaktieren, wobei weiter die Leiterplatte parallel zu den Rotorblechen ausgerichtet ist. So ist zur eindeutigen Verschaltung der Statorspulen ein sogenannter Verschaltungsträger angegeben, welcher zunächst aus einer herkömmlichen Platine besteht. Die Wicklungen im Motor besitzen als Anschluss jeweils zwei Drahtstifte, die mit dem Wicklungsanfang bzw. Wicklungsende verbunden sind. Diese Anschlüsse ragen über die Spulen hinaus, so dass sie in die Leiterplatte eintauchen können, welch letztere parallel zu den Rotor- bzw. Statorblechen liegt. Diesbezüglich ist weiter vorgesehen, dass die Leiterplatte zwischen dem Rotor und einer Lageraufnahme für den Rotor drehfest angeordnet ist und somit innerhalb des Motors liegt. Auf der Leiterplatte befinden sich Leiterbahnen, die die Spulen bei Montage der Leiterplatte in den Motor direkt automatisch, eindeutig miteinander verbinden. Als weiter vorteilhaft erweist sich hierbei, dass die Leiterplatte einen kreisscheibenförmigen Grundriss mit nach außen über den Statorkern abragendem Anschlussabschnitt aufweist, wobei der kreisscheibenförmige Grundriss im Durchmesser dem Innendurchmesser des Statorkerns angepasst ist. Im Bereich des nach außen abragenden Anschlussabschnittes ist ein Platinenrandstecker anordbar, über welchen die Spulenpaare eindeutig identifiziert werden können. Zudem befindet sich auf der Platine die Sensorik, die bei einem dreiphasigen Motor in der Konfiguration sechs Statorpole und vier Rotorpole aus zwei oder drei Gabellichtschranken bestehen kann. Denkbar ist auch der Einsatz von Reflexlichtschranken als Sensoren. Diese Lichtschranken stehen in bekannter Winkelbeziehung zu den einzelnen Spulen, so dass die phasenrichtige Zuordnung der Sensorsignale nicht mehr falsch realisiert werden kann. Bei einem dreiphasigen Motor besteht ferner die Möglichkeit eine180° -Symmetrie auszunutzen, d. h. bezogen auf den Stator existieren zwei mögliche Montagepositionen, welche beide gültig sind. Bei einer runden Außenkontur des Stators sind infolge dessen auch sechs Montagepositionen möglich. Über die Anschlüsse der Spulen wird die Leiterplatte gleichzeitig ausgerichtet, wobei die Anschlüsse nach der Montage mit der Leiterplatte verlötet werden. Die Signale der Sensorik werden ebenfalls auf den Rand der Leiterplatte gelegt, so dass auch hier wieder mit einem Platinerandstecker oder ähnlichem die Verbindung zur Elektronik hergestellt werden kann. Da die Leiterplattenfläche des Verschaltungsträgers gemäß dem Innendurchmesser des Stators relativ groß ausgebildet ist, ist weiter denkbar, die gesamte Elektronik oder zumindest Teile davon auf der Leiterplatte zu integrieren. Dies bietet gleichzeitig den Vorteil einer sehr kurzen Leiterbahnführung, so dass EMV-Störungen vermieden oder zumindest verringert werden. Als besonders vorteilhaft erweist sich weiter, dass die Leiterplatte die Lagesensoren für den Rotor aufweist. Zudem kann vorgesehen sein, dass die Leiterplatte die Umrichtungselektronik zum links- als auch rechtsdrehbaren Antreiben des Motors aufweist. Auch erweist es sich als vorteilhaft, dass eine Haltescheibe der Rotorbleche als Geberscheibe für die Ermittlung der Rotorstellung ausgebildet ist. Hierzu ist die Haltescheibe der Rotorbleche auf einem möglichst großen Außenradius zylinderförmig ausgeprägt, auf welchem Zylinder geeignete Kreissegmente entfernt sind. Die zylinderartige Geberscheibe dreht sich durch die Lichtschranken hindurch, welche sich auf dem Verschaltungsträger bzw. auf der Leiterplatte befinden, wozu bevorzugt die Geberscheibe der Leiterplatte zugewandt an dem Rotor angeordnet ist. Diese Geberscheibe besitzt dabei eine eindeutig definierte Zuordnung zur Rotorposition. Da hierbei die Lage des Rotors durch die, die Lageraufnahmen für denselben aufweisenden Lagerbrücken eindeutig bestimmt ist, stellt sich der Abstand der Geberscheibe zur Leiterplatte ebenfalls automatisch ein. In einer vorteilhaften Weiterbildung des Erfindungsgegenstandes ist vorgesehen, dass eine Haltescheibe der Rotorbleche als Kühllüfter ausgebildet ist, wobei letzterer an dem, der Leiterplatte abgewandten Ende des Rotors ausgebildet ist. Zufolge dieser Ausgestaltung übernimmt diese Haltescheibe wie auch die zuvor beschriebene Haltescheibe eine Doppelfunktion.

Nachstehend ist die Erfindung anhand der beigefügten Zeichnung, welche lediglich Ausführungsbeispiele darstellt, näher erläutert. Es zeigt:
- Fig. 1: eine Seitenansicht eines Rotors für einen erfindungsgemäßen Reluktanzmotor;
- Fig. 2: eine Seitenansicht eines, dem Rotor gemäß Fig.1 zuordbaren Auskleidungsteiles;
- Fig. 3: eine Seitenansicht eines weiteren mit dem Auskleidungsteil gemäß Fig. 2 axial zusammensteckbaren Auskleidungsteiles zur Anordnung an dem Rotor gemäß Fig.1;
- Fig. 4: die Stirnansicht gegen den Rotor;
- Fig. 5: die Stirnansicht gegen das Auskleidungsteil gemäß Fig. 2;
- Fig. 6: die Stirnansicht gegen das Auskleidungsteil gemäß Fig. 3;
- Fig. 7: eine Zusammenbaudarstellung des mit den Auskleidungsteilen versehenen Rotors;

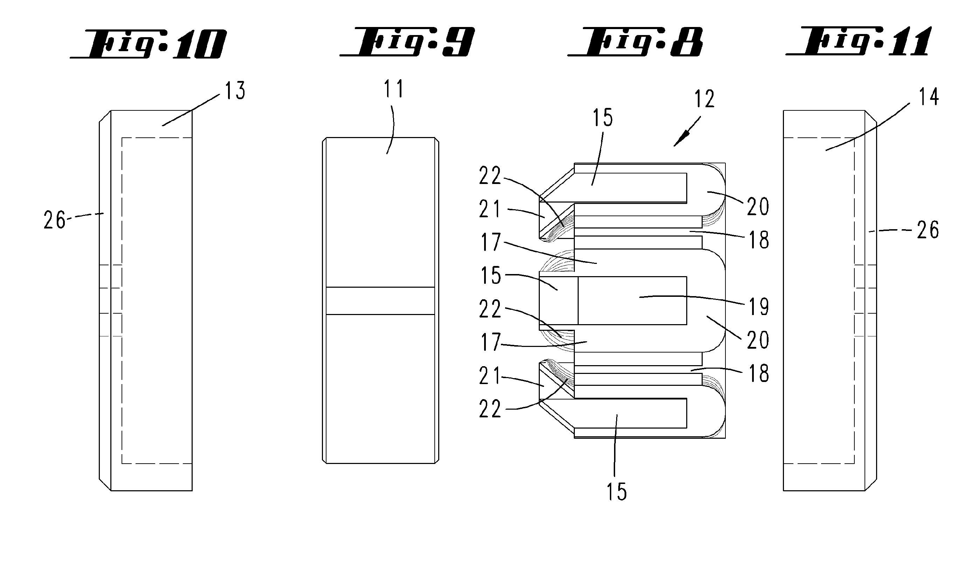

- Fig. 8: eine Seitenansicht eines mit Statorspulen versehenen Statorabdeckkörpers;
- Fig. 9: eine Seitenansicht eines Statorkerns;
- Fig. 10: eine Seitenansicht eines dem Statorkern und dem Statorabdeckkörper zuordbaren Lagerunterteiles;
- Fig. 11: die Seitenansicht eines Lageroberteiles;

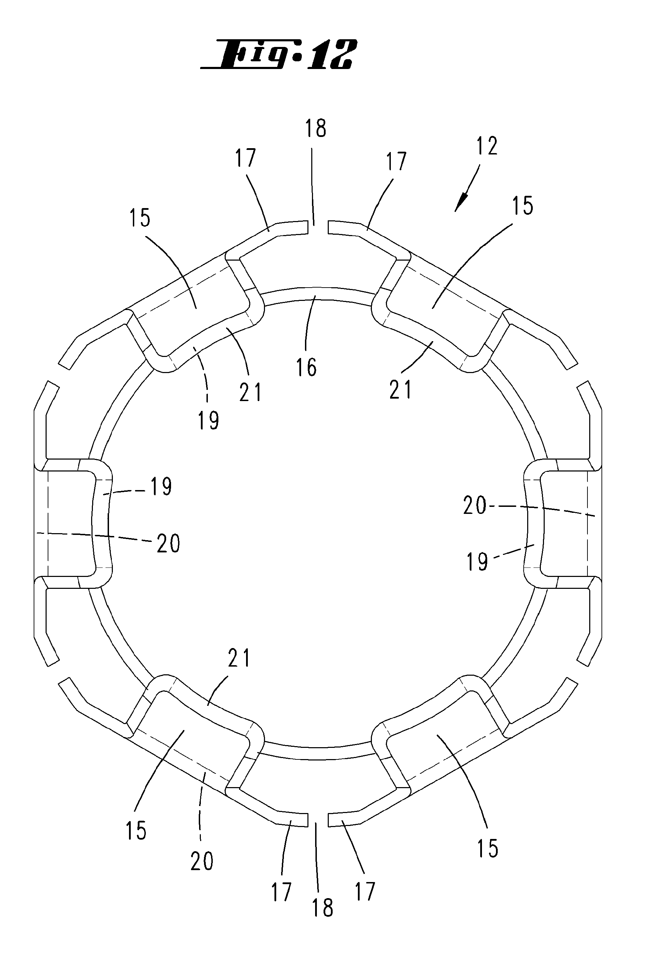

- Fig. 12: die Stirnansicht gegen den Statorabdeckkörper;
- Fig. 13: eine der Fig. 12 entsprechende Darstellung, jedoch nach Anordnung von Statorspulen auf den Statorabdeckkörper;
- Fig. 14: die Stirnansicht gegen den, mit den Wicklungen versehenen Statorabdeckkörper nach Einsetzen desselben in den Statorkern;
- Fig. 15: die Rückansicht gegen den, in den Statorkern eingeschobenen, Wicklungen aufweisenden Statorabdeckkörper, bei in den Stator eingeführtem Rotor;

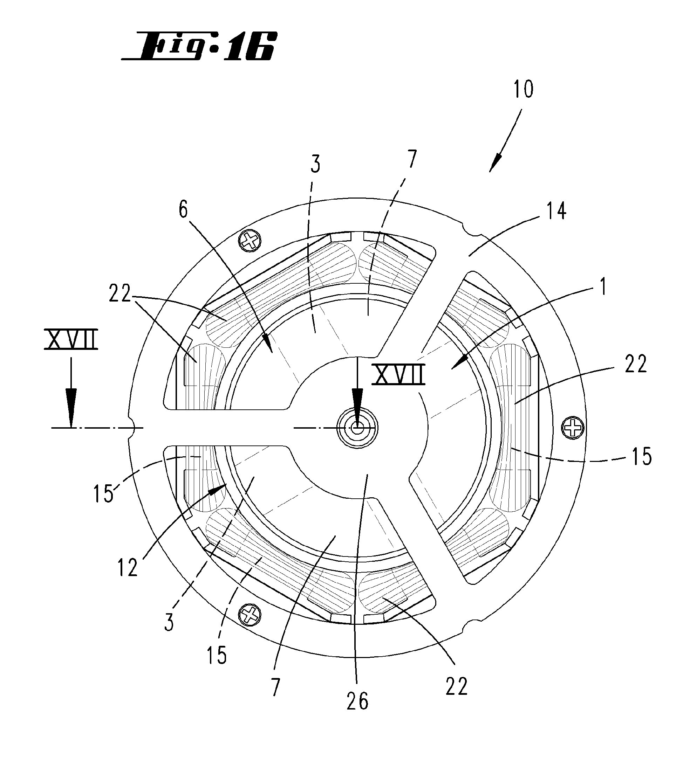

- Fig. 16: eine der Fig. 15 entsprechende Darstellung, jedoch nach vollständiger Montage des Reluktanzmotors, d. h. nach Anordnung der Lagerunter- und oberteile;

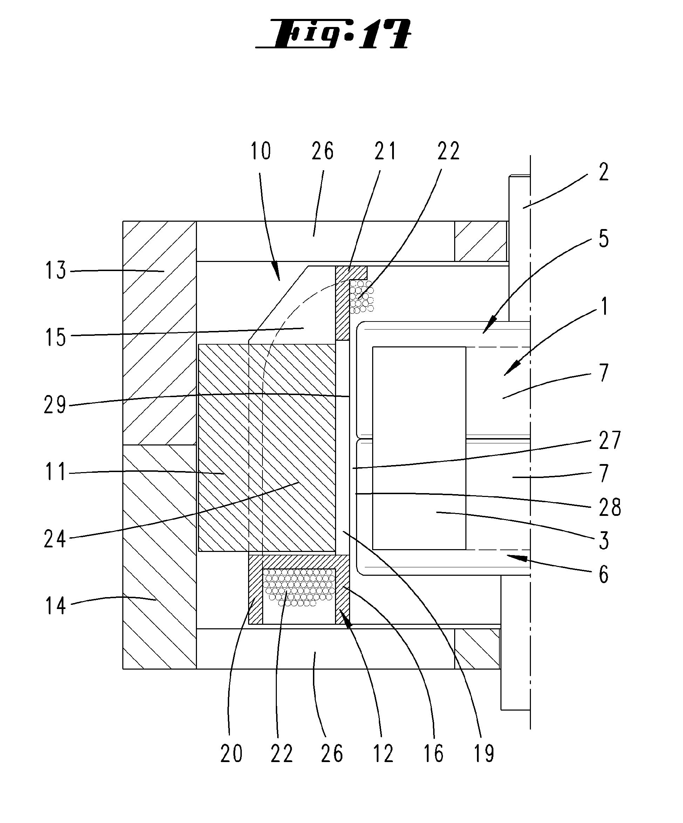

- Fig. 17: den Schnitt gemäß der Linie XVII-XVII in Fig. 16;
- Fig. 18: eine der Fig. 17 entsprechende Schnittdarstellung, jedoch eine weitere Ausführungsform betreffend;
- Fig. 19: eine perspektivische Darstellung eines Rotors, eine weitere Ausführungsform betreffend;
- Fig. 20: eine perspektivische Darstellung eines Stators in einer weiteren Ausführungsform mit einem Rotor gemäß der Ausführungsform in Fig. 19;
- Fig. 21: eine der Fig. 20 entsprechende Darstellung, nach Anordnung einer Leiterplatte;
- Fig. 22: die Leiterplatte in einer Einzeldarstellung mit schematisch angedeuteten Statorspulen;

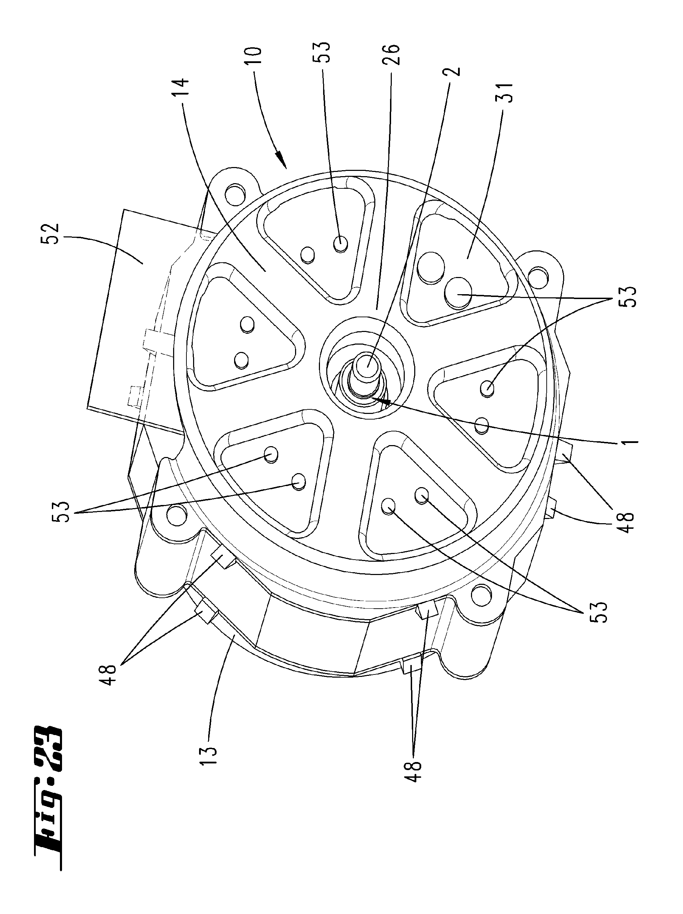

- Fig. 23: eine der Fig. 21 entsprechende Darstellung nach Anordnung von Lagerbrücken für den Rotor.

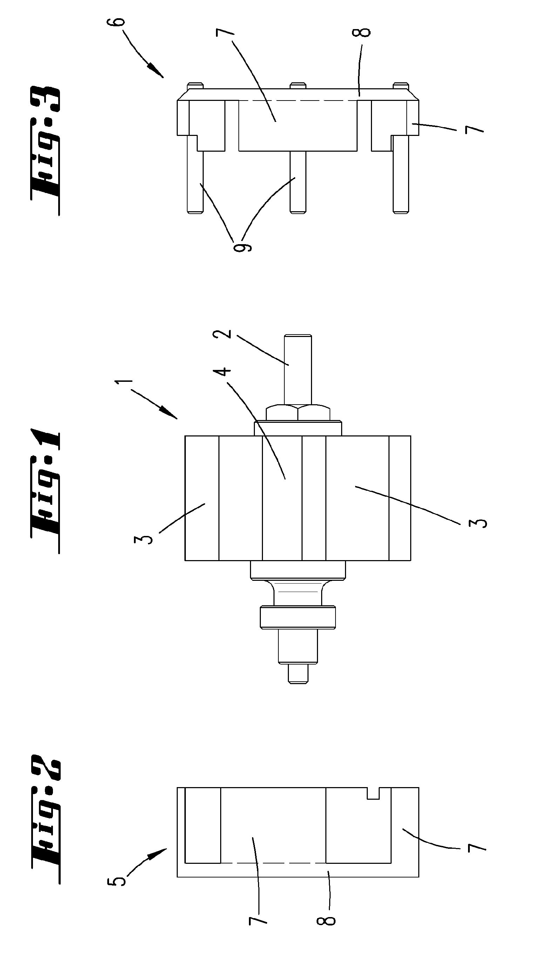

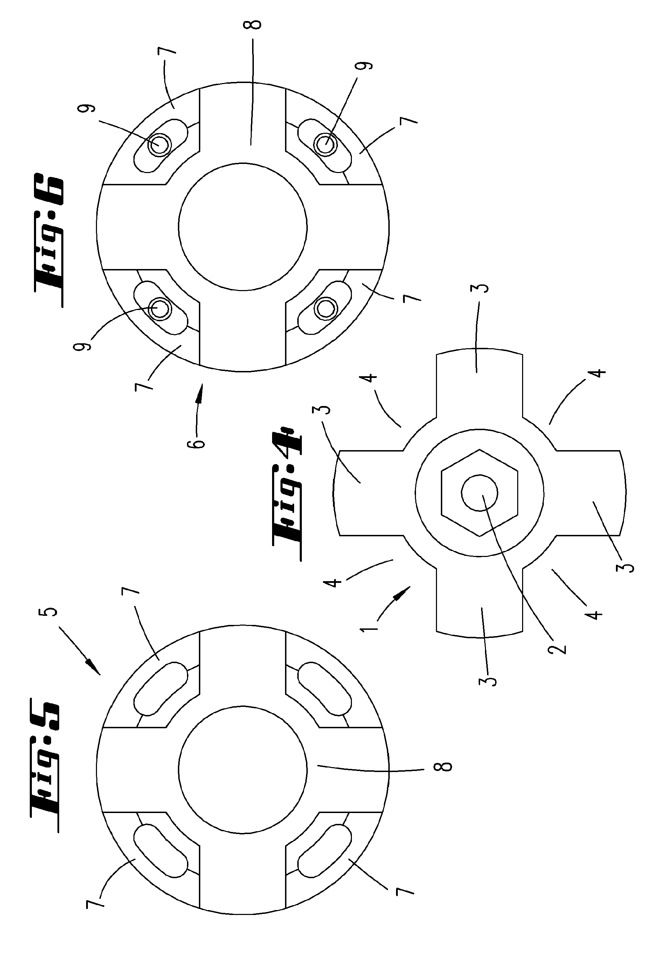

Dargestellt und beschrieben ist zunächst mit Bezug zu Fig. 1 ein Rotor 1 mit einem Rotorachskörper 2 und vier winkelgleichmäßig um den Rotorachskörper angeordneten Rotorsegmenten 3, wobei gemäß Fig. 4 zwischen den Rotorsegmenten 3 Freiräume 4 verbleiben.

Zur Reduzierung der Schallemission werden zur Schaffung eines Zylinderkörpers die Zwischenräume 4 zwischen den flügelartigen Rotorsegmenten 3 ausgefüllt. Hierzu sind zwei axial zusammensteckbare Auskleidungsteile 5, 6 vorgesehen, wobei jedes Auskleidungsteil 5, 6 entsprechend dem Querschnitt der Zwischenräume 4 ausgebildete Füllsegmente 7 aufweist.

Wie aus den Einzeldarstellungen zu erkennen, sind die Auskleidungsteile 5, 6 topfartig ausgebildet, mit einem Kreisscheibenteil 8 und vier von diesem sich erstreckenden Füllkörpersegmenten 7. Bevorzugt sind die Auskleidungsteile 5, 6 als Kunststoffteile, weiter bevorzugt als Kunststoffspritzteile ausgeformt.

Die beiden Auskleidungsteile 5, 6 werden, den Rotor 1 zwischen sich aufnehmend, über den Rotorachskörper 2 geschoben und axial mittels Schrauben 9 miteinander verspannt.

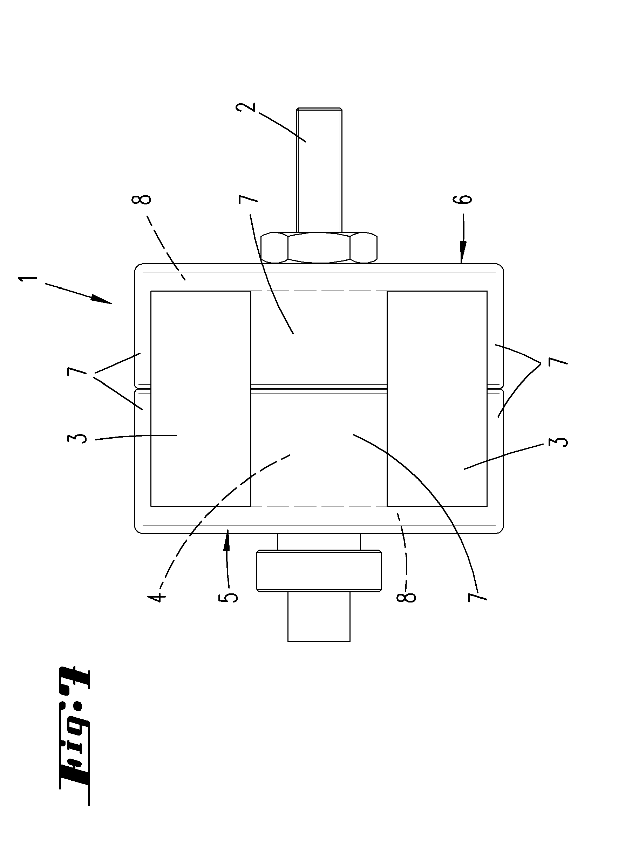

Hiernach ist ein Rotor 1 in Form eines Zylinderkörpers gemäß Fig. 7 geschaffen, wodurch Druckschwankungen bei Drehung des Rotors im Stator wirkungsvoll unterdrückt werden. Die Schallemission wird hierdurch deutlich reduziert. Die Füllkörpersegmente 7 lassen sich auch gleichzeitig zum Wuchten des Rotors 1 mit verwenden. Bei einer Ausgestaltung der Füllkörpersegmente 7 als Kunststoffspritzteile lassen sich in deren Oberflächen auch beliebige Formen bzw. Strukturen verwirklichen. Durch geeignete Ausbildung lässt sich auch eine Art Kühllüfter erzeugen.

Der Stator 10 des erfindungsgemäßen Reluktanzmotors setzt sich im Wesentlichen zusammen aus einem Statorkern 11, einem in letzteren einführbaren Statorabdeckkörper 12, einem Lagerunterteil 13 sowie einem Lageroberteil 14.

Der Statorabdeckkörper 12 ist im Wesentlichen als Hohlzylinder ausgebildet und weist eine der Spulenzahl entsprechende Anzahl von Wickelkernschuhen 15 auf, welche im Wesentlichen außenseitig eines zylindrischen Grundkörpers 16 parallel zur Körperachse des Statorabdeckkörpers 12 ausgerichtet angeordnet sind.

Die Wickelkernschuhe 15 besitzen über den Großteil ihrer in Achsrichtung gemessenen Länge etwa tangential abweisende Flügel 17, wobei die aufeinander zu weisenden Flügel 17 zweier benachbarter Wickelkernschuhe 15 zueinander beabstandet sind und einen Spalt 18 belassen.

Die Wickelkernschuhe 15 sind im Querschnitt im Wesentlichen U-förmig ausgebildet, wobei an den U-Stegen endseitig die nach tangential außen weisenden Flügel 17 angeordnet sind. Der, die U-Stege verbindende U-Schenkel ist im Wesentlichen durch den Grundkörper 16 gebildet, wobei im Bereich der Wickelkernschuhe 15 der Grundkörper 16 bzw. der U-Schenkel eines jeden Wickelkernschuhs 15 einen Durchbruch in Form eines Fensters 19 aufweist. Zufolge dessen ist die U-Öffnung eines jeden Wickelkernschuhs 15 zum Inneren des Statorabdeckkörpers 12 hin erweitert.

Fußseitig ist ein jeder Wickelkernschuh 15 mit einem weiteren, gleich wie die Flügel 17 zum Grundkörper 16 radial beabstandeten Flügel 20 versehen.

Diesem fußseitigen Flügel 20 gegenüberliegend ragt der zugeordnete Wickelkernschuh 15 in axialer Richtung über den Grundkörper 16 hinaus und bildet jeweils einen in das Statorabdeckkörper-Innere weisenden, abgewinkelten Wickelkopf 21 aus.

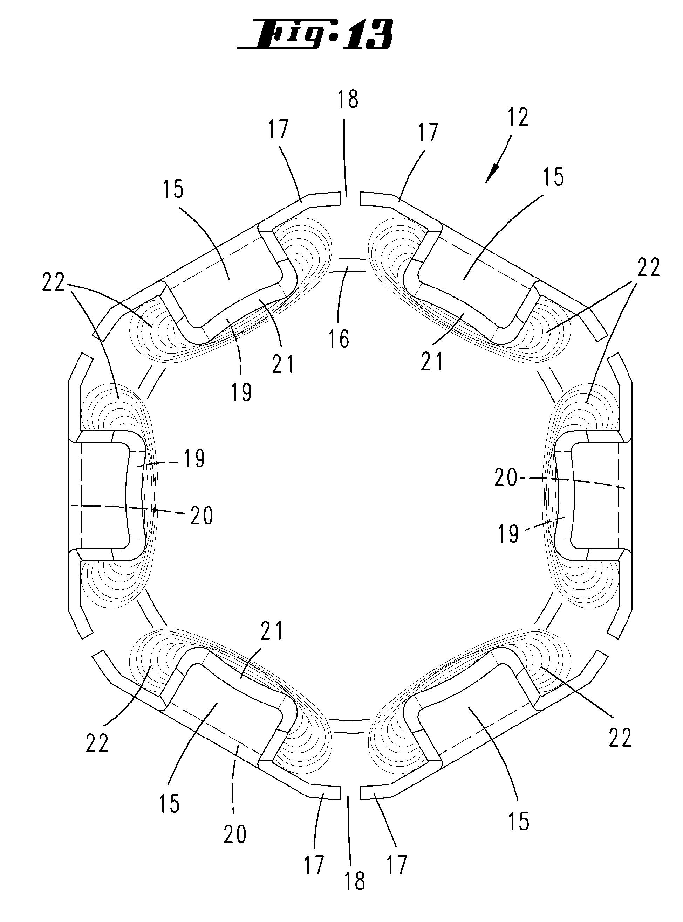

Zufolge dieser Ausgestaltung des Statorabdeckkörpers 12 dient dieser zunächst als Wickelkörper. Dieser wird ähnlich wie bei einem Rotor eines Universalmotors gewickelt. Die in einfachster Weise aufgewickelten Statorwicklungen 22 umfassen den jeweiligen Wickelkernschuh 15 im Bereich der an letzterem angeordneten Flügel 17 und 20, wobei diese Flügel 17, 20 zur sicheren Halterung der Statorwicklungen 22 auf dem Wickelkernschuh 15 dienen. Im Bereich des kopfseitigen Endes eines jeden Wickelkernschuhs 15 sind die Statorwicklungen 22 über den, nach innen abgewinkelten Wickelkopf 21 geführt, wonach die Wicklungen 22 in das Innere des Statorabdeckkörpers 12 über den Innendurchmesser des Grundkörpers 16 hinaus vorragen (vgl. Fig. 13).

Neben dem Vorteil einer wesentlich vereinfachten Statorwickeltechnik ergibt sich der vorteilhafte Effekt, dass durch den Statorabdeckkörper 12 die Zwischenräume zwischen den Statorwicklungen 22 durch einen, vom Grundkörper 16 gebildeten Körper ausgefüllt sind, was zusätzlich zu der vorbeschriebenen Ausbildung des Rotors 1 als zylindrischer Körper zur Verringerung der Schallemission beiträgt.

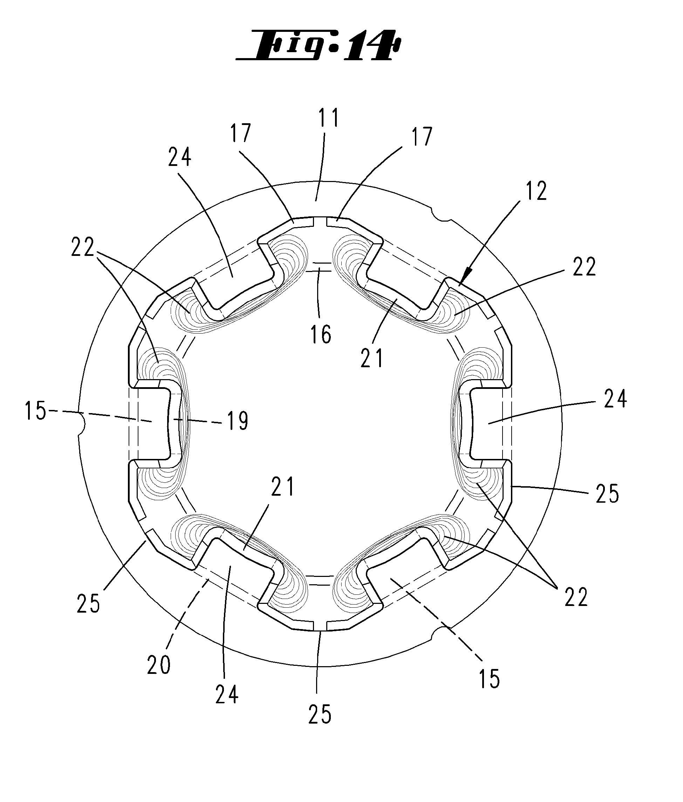

Der wie in Fig. 13 dargestellte, mit Statorwicklungen 22 versehene Statorabdeckkörper 12 wird in einfachster Weise einseitig in axialer Richtung in den Statorkern 11 eingeschoben derart, dass Wickelkerne 24 von der, den Wickelkopf 21 aufweisenden Kopfseite der Wickelkernschuhe 15 ausgehend in die U-Räume der Wickelkernschuhe 15 eintauchen. Die von den Flügeln 17 begrenzten, von Statorwicklungen 22 durchsetzten Abschnitte des Statorabdeckkörpers 12 tauchen in entsprechend ausgebildete, parallel zur Körperachse ausgerichtete Freischnitte 25 des Statorkerns 11 ein (vgl. Fig. 14).

Durch die gewählte abgewinkelte Anordnung der Statorwicklung 22, bei welcher diese kopfseitig, über den Wickelkopf 21 geführt, in das Innere des Statorabdeckkörpers 12 hineinragen, ist das Einschieben des umwickelten Statorabdeckkörpers 12 in den Statorkern 11 ermöglicht.

Weiter kann, jedoch nicht dargestellt, der Statorabdeckkörper 12 einseitig angeformt oder angebracht eine Lageraufnahme in Form einer Brücke für den Rotor 1 aufweisen. Es besteht jedoch auch die Möglichkeit, wie dargestellt, das Lagerunterteil 13 oder das Lageroberteil 14 mit einer derartigen, eine Lageraufnahme aufweisenden Brücke 26 zu versehen.

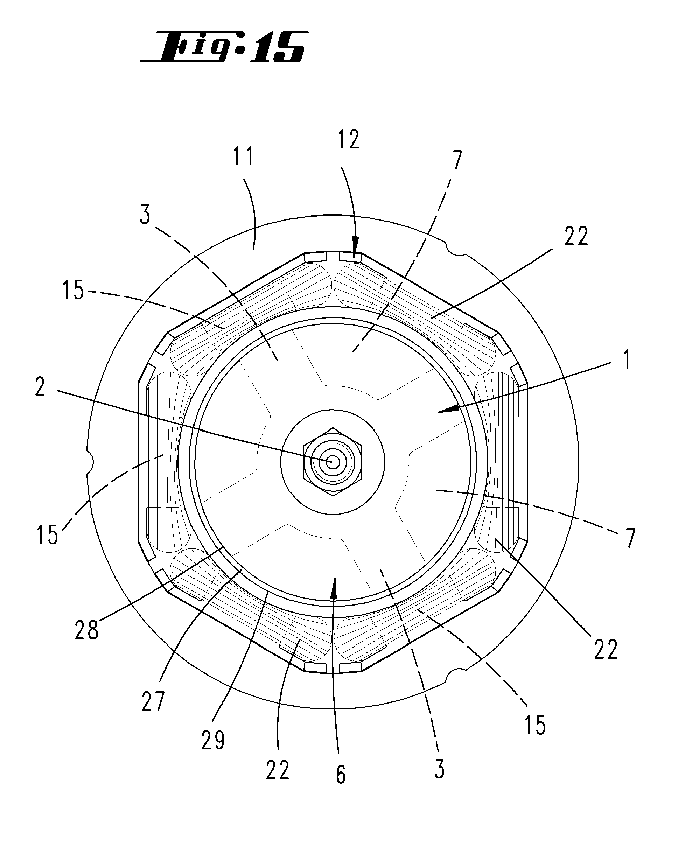

Wie aus der Darstellung in Fig. 15 zu erkennen, ist nach Einschieben des gemäß den Fig. 1 bis 7 zusammengesetzten Rotors 1 in das Innere des Statorabdeckkörpers 12 ein Ringraum 27 zwischen Rotoraußenfläche 28 und Statorinnenfläche 29 gebildet, wobei durch die Ausfüllung von Zwischenräumen zwischen den Statorwicklungen 22 bzw. zwischen den Rotorsegmenten 3 durch Füllsegmente 7 bzw. 16 jeweils eine im Wesentlichen glattflächige Oberfläche 28, 29 gebildet ist. Zufolge dessen ist sowohl die Rotoroberfläche 28 wie auch die Statorinnenfläche 29 homogenisiert, wodurch Druckschwankungen bei Drehung des Rotors 1 im Stator 10 wirkungsvoll unterdrückt werden.

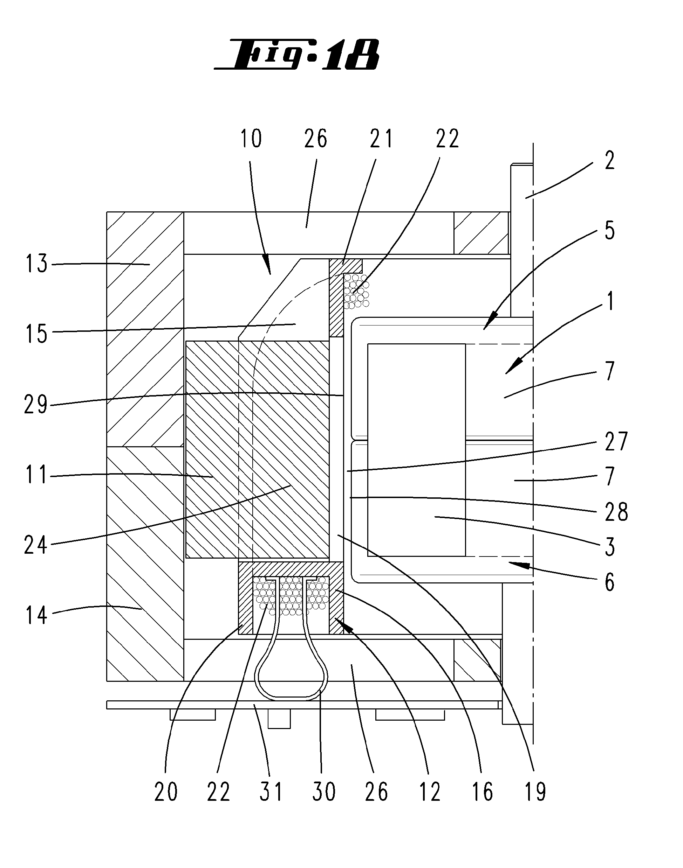

In Fig. 18 ist eine alternative Ausgestaltung dargestellt, bei welcher an einem Wickelkernschuh 15 ein Bügelfederkontakt 30 angebracht ist. Dargestellt ist eine fußseitige Anordnung des Bügelfederkontaktes 30 in einem durch den Flügel 20 und den Grundkörper 16 seitlich begrenzten, nach unten freien und von den Statorwicklungen 22 durchsetzten U-Raum. Der Bügelfederkontakt 30 ist entsprechend fußseitig unmittelbar von den Statorwicklungen 22 kontaktiert.

Oberseitig kontaktiert der Bügelfederkontakt 30 eine Leiterplatte 31, auf welcher Lagesensoren für den Rotor 1 und/oder eine Umrichtungselektronik zum links als auch rechts drehbaren Antreiben des Motors angeordnet ist.

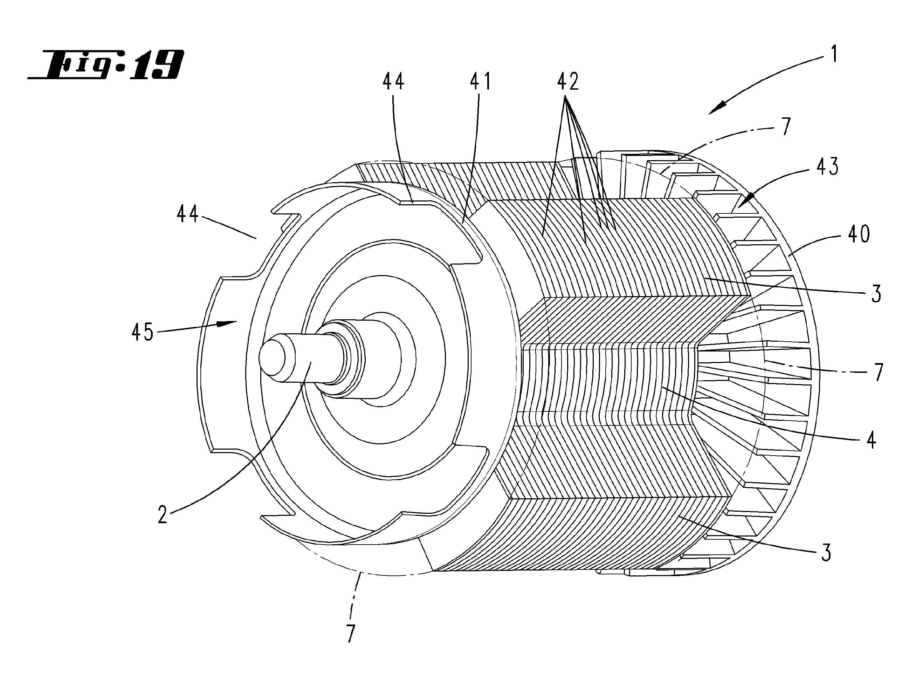

In Fig. 19 ist eine alternative Ausgestaltung des Rotors 1 dargestellt. Die Haltescheiben 40, 41, zwischen welchen die Rotorbleche 42 gefasst sind, übernehmen in dieser Ausführungsform jeweils eine Doppelfunktion. So ist die Haltescheibe 40 zugleich als Kühllüfter 43 ausgebildet, mit einem Durchmesser, welcher dem Rotordurchmesser im Bereich der Rotorsegmente 3 etwa entspricht.

Die diesem Kühllüfter 43 gegenüberliegende Haltescheibe 41 ist im Wesentlichen hohlzylindrisch ausgeformt, wobei im Bereich der Zylinderwandung Segmente 44 freigeschnitten sind. Hierdurch bildet die Haltescheibe 41 zugleich eine Geberscheibe 45 aus, zur Zusammenwirkung mit einer Lichtschranke, welche sich auf der Leiterplatte 31 befindet. Die Geberscheibe 45 besitzt hierbei eine eindeutig definierte Zuordnung zur Rotorposition. Da die Lage des Rotors 1 durch die Brücken 26 von Lagerunterteil 13 und Lageroberteil 14 eindeutig bestimmt ist, stellt sich der Abstand der Geberscheibe 45 zur Leiterplatte 31 ebenfalls automatisch ein.

Des Weiteren können auch bei dieser Ausführungsform die Zwischenräume 4 zwischen den flügelartigen Rotorsegmenten 3 mit, in Fig. 19 strichpunktiert angedeuteten Füllsegmenten 7 ausgefüllt sein.

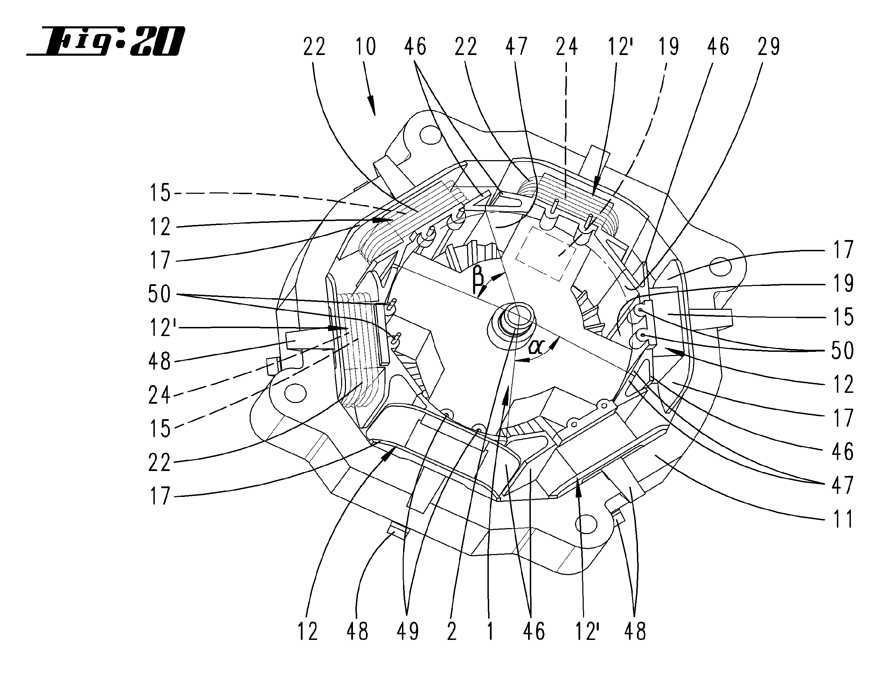

Eine weitere Ausführungsform zur Schaffung einer homogenen Statorinnenfläche 29 ist in der Fig. 20 dargestellt. Hierbei ist eine Mehrzahl von Statorabdeckköpern 12, 12' vorgesehen, die sich rotorseitig im Wesentlichen zu einem Zylinder ergänzen. Jeder Statorabdeckkörper 12,12' ist als Einzelwickelkörper ausgebildet, mit einem Wickelkernschuh 15. Letzterer besitzt in Richtung auf den Rotor 1 einen Durchbruch in Form eines Fensters 19, in welchem der Metallwickelkern rotorseitig freiliegt.

Des Weiteren ist der Statorabdeckkörper 12, 12' im Grundriss annähernd H-förmig ausgebildet, wobei der die H-Schenkel verbindende H-Steg durch den Wickelkernschuh 15 geformt ist. Die H-Schenkel bilden beidseitig des Wickelkernschuhs 15 Flügel 17 bzw. 46, in welchem hierdurch gebildeten Zwischenraum die Statorwicklungen 22 eingebracht werden.

Die Flügel 17 und 46 sind im Wesentlichen parallel zueinander ausgerichtet, wobei weiter zwei Flügel 46 zweier benachbarter Statorabdeckkörper 12, 12' den Zwischenraum zwischen den Statorwicklungen 22 in der Einbauposition gemäß Fig. 20 überdecken.

Den Flügeln 46 rotorseitig vorgelagert sind an den Statorabdeckkörpern 12 von den Flügeln 46 abgewinkelt verlaufende Decksegmente 47 vorgesehen, die im Grundriss des Statorabdeckkörpers 12, 12' zusammen mit der rotorseitigen Stirnfläche des Wickelkernschuhes 15 etwa ein Kreissegment bilden.

Die so gebildeten Statorabdeckkörper 12, 12' mit den aufgebrachten Statorwicklungen 22 werden von der Statorinnenseite her nach radial außen auf den Statorkern 11 mittels Federzungen 48 aufgeklipst, wobei zur kollisionsfreien Anordnung zwei verschiedene Wickelkörper bzw. Statorabdeckkörper 12 und 12' vorgesehen sind, deren Rundungen im Bereich der Decksegmente 47 unterschiedliche Kreis-Segmente ausfüllen. So bilden die Statorabdeckkörper 12' über einen Winkel Alpha ein größeres Statorinnenflächen-Segment aus als die Statorabdeckkörper 12 (Winkel Beta).

Um eine nahezu homogene Statorinnenfläche 29 zu erzielen treten die Stirnflächen der aufeinander zuweisenden Decksegmente 47 zweier benachbarter Statorabdeckkörper 12 und 12' stumpf aneinander.

Durch die Federzungen 48 sind die Statorabdeckkörper 12, 12' mechanisch arretiert. Nach einer Montage der als Brücke dienenden Lagerunterteil 13 und Lageroberteil 14 sind diese Rasthaken zusätzlich gegen Verrutschen in radialer Richtung gesichert.

Jeder Statorabdeckkörper 12 bzw. 12' besitzt zwei Steckaufnahmen 49 zur Aufnahme zweier Anschluss-Stifte 50. Letztere sind mit dem Wicklungsanfang bzw. Wicklungsende der zugeordneten Statorwicklungen 22 verbunden. Diese Anschlüsse ragen über die Spulen hinaus, so dass sie parallel zu den Rotor- bzw. Statorblechen innerhalb des Motors und demnach zwischen Rotorblech bzw. der als Haltescheibe 41 dienenden Geberscheibe 45 und dem zugewandten Lageroberteil 14 liegt.

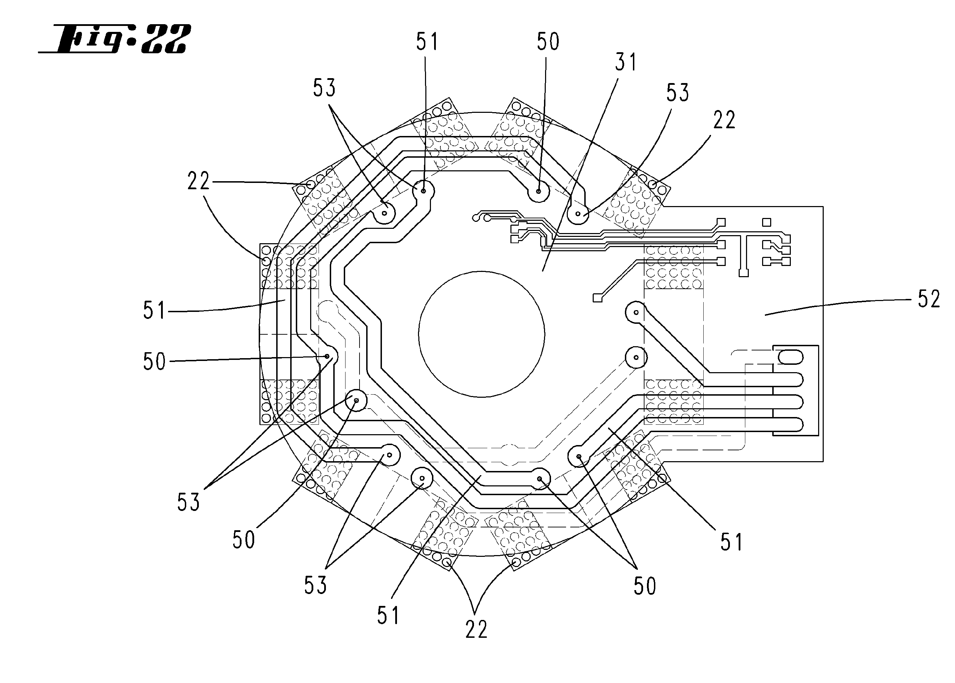

Auf dieser in Fig. 22 in einer Einzeldarstellung gezeigten Leiterplatte 31 befinden sich Leiterbahnen 51, die die Statorwicklungen 22 automatisch eindeutig miteinander verbinden.

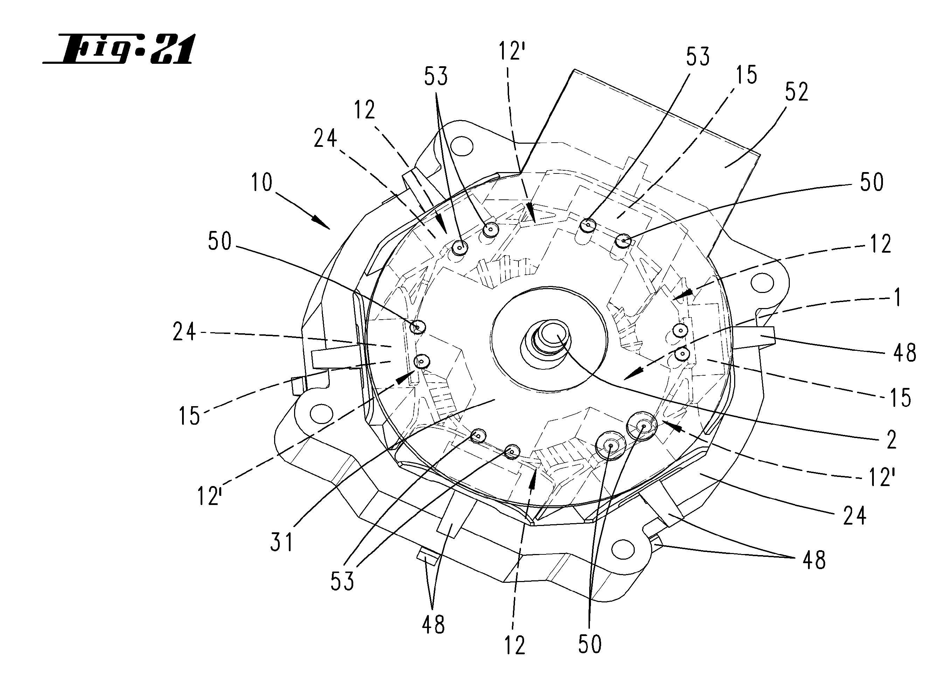

Wie insbesondere aus der Darstellung in Fig. 21 zu erkennen, weist hierbei die Leiterplatte 31 einen kreisscheibenförmigen Grundriss mit nach außen über den Statorkern 11 abragendem Anschlussabschnitt 42 auf, wobei der kreisscheibenförmige Grundriss im Durchmesser dem Innendurchmesser des Statorkerns 11 etwa angepasst ist. Im Bereich des Anschlussabschnittes 52 können über einen Platinenrandstecker die Spulenpaare eindeutig identifiziert werden. Ferner befindet sich auf der Leiterplatte 31 die Sensorik, die bei einem dreiphasigen Motor in der dargestellten Konfiguration mit sechs Statorpolen und vier Rotorpolen aus zwei oder drei Gabellichtschranken bestehen kann.

Die nicht dargestellten Lichtschranken stehen in bekannter Winkelbeziehung zu den einzelnen Statorspulen, so dass die phasenrichtige Zuordnung der Sensorsignale eindeutig realisiert wird. Über die Anschlüsse 53 der Statorwicklungen 22 wird die Leiterplatte 31 gleichzeitig ausgerichtet. Diese Anschlüsse 53 bzw. die hier durchtretenden Anschluss-Stifte 50 der Statorwicklungen 22 werden nach der Montage mit der Leiterplatte 31 verlötet.

Die Signale der Sensorik werden ebenfalls auf den Rand der Leiterplatte 31, d. h. in den Bereich des Anschlussabschnittes 52 gelegt, so dass auch hier wieder mit einem Platinenrandstecker oder ähnlichem die Verbindung zur Elektronik hergestellt werden kann.

Bei einem dreiphasigen Motor besteht ferner die Möglichkeit, eine 180°-Symmetrie auszunutzen, d. h. bezogen auf den Stator 10 existieren zwei mögliche Montagepositionen, die beide gültig sind.

Durch die zielgenaue Anordnung der Leiterplatte 31 zu den Statorwicklungen 22 ist die korrekte Verbindung der Statorwicklungen 22 ohne die Gefahr eines Verdrahtungsfehlers stets gegeben.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Reluktanzmotor mit einem Rotor (1) und einem Stator (10), wobei der Stator (10) einzelne Statorspulen mit Statorwicklungen (22) aufweist, **dadurch gekennzeichnet, dass** eine Leiterplatte (31) vorgesehen ist und dass die Leiterplatte (31) Lagesensoren für den Rotor (1) aufweist, die mit einer rotorseitigen Geberscheibe (45) zusammenwirken.

2. Reluktanzmotor nach Anspruch 1, **dadurch gekennzeichnet, dass** die Geberscheibe (45) der Leiterplatte (31) zugewandt an dem Rotor (1) angeordnet ist.

3. Reluktanzmotor nach einem der Ansprüche 1 oder 2, **dadurch gekennzeichnet, dass** an dem der Leiterplatte (31) abgewandten Ende des Rotors (1) ein Kühllüfter (43) ausgebildet ist.

4. Reluktanzmotor nach einem der vorhergehenden Ansprüche, **dadurch gekennzeichnet, dass** die Geberscheibe (45) zylinderförmig ausgeprägt ist, aus welchem Zylinder geeignete Kreissegmente entfernt sind.

5. Reluktanzmotor nach einem der vorhergehenden Ansprüche, **dadurch gekennzeichnet, dass** die Geberscheibe (45) sich durch eine Lichtschranke bewegt, welche sich auf der Leiterplatte (31) befindet.

6. Reluktanzmotor nach einem der vorhergehenden Ansprüche, **dadurch gekennzeichnet**e, dass auf der Leiterplatte (31) zwei oder drei Gabellichtschranken vorgesehen sind.

7. Reluktanzmotor nach einem der Ansprüche 3 bis 6, **dadurch gekennzeichnet, dass** der Kühllüfter (43) durch eine Haltescheibe (40) der Rotorbleche (42) gebildet ist.

8. Reluktanzmotor nach einem der vorhergehenden Ansprüche, **dadurch gekennzeichnet, dass** der Rotor (1) aus Rotorblechen (42) zusammengesetzt ist und dass die Leiterplatte (31) parallel zu den Rotorblechen (42) ausgerichtet ist.

9. Reluktanzmotor nach einem der vorhergehenden Ansprüche, **dadurch gekennzeichnet, dass** die Leiterplatte (31) zwischen dem Rotor (1) und einer Lageraufnahme (14) für den Rotor (1) drehfest angeordnet ist.

10. Reluktanzmotor nach einem der vorhergehenden Ansprüche, **dadurch gekennzeichnet, dass** eine Statorwicklung (22) Kontakte aufweist, die unmittelbar die Leiterplatte kontaktieren.

11. Reluktanzmotor nach Anspruch 10, **dadurch gekennzeichnet, dass** jede Statorwicklung (22) zwei Anschlussstifte (50) aufweist die mit der Leiterplatte (31) kontaktieren.

12. Reluktanzmotor nach einem der vorhergehenden Ansprüche, **dadurch gekennzeichnet, dass** die für die Ermittlung der Rotorstellung vorgesehene Geberscheibe (45) als Haltescheibe (41) der Rotorbleche (42) ausgebildet ist.

13. Reluktanzmotor nach einem der vorhergehenden Ansprüche, **dadurch gekennzeichnet, dass** die Leiterplatte (31) einen Anschlussabschnitt (52) aufweist mit einem Platinenrandstecker.

14. Reluktanzmotor nach einem der vorhergehenden Ansprüche, **dadurch gekennzeichnet, dass** die Leiterplatte (31) vermittels Anschlüssen (53) der Statorwicklungen (22) ausgerichtet ist.

15. Reluktanzmotor nach Anspruch 14, **dadurch gekennzeichnet, dass** Anschlussstifte (50) der Anschlüsse (53) durch die Leiterplatte (31) hindurchtreten.
